# EUROPÄISCHE PATENTANMELDUNG

(11) **EP 4 807 224 A1**
(43) Veröffentlichungstag der Anmeldung: **16.09.2026**
(21) Anmeldenummer: 26156335.7
(22) Anmeldetag: 04.02.2026
(51) Int. Cl.: F16K 7/12, F16K 27/12

(54) **STERILE PROZESSANLAGE**

(30) Priorität: 14.03.2025 DE 102025109806
(71) Anmelder: SISTO Armaturen S.A., 6468 Echternach (LU)
(72) Erfinder: Hackenberger, Bernd, 6468 Echternach (LU); Bischof, Matthias, 6468 Echternach (LU); Schmitt, Michael, 6468 Echternach (LU)
(74) Vertreter: Busch, Tobias

(57) **Zusammenfassung**

Sterile Prozessanlage, insbesondere in der Pharma-, Biotechnologie- und Lebensmittelindustrie, mit mindestens einer Armaturanordnung (1). Jede Armaturanordnung (1) ist nicht lösbar in ein Rohrleitungssystem (7) integriert. Jede Armaturanordnung (1) weist mindestens eine Membran auf, die Räume voneinander dichtend trennt. Jede Membran (6) ist zwischen einem Gehäuseunterteil (3) und einer Haube (4) eines Armaturgehäuses (5) angeordnet. Jede Armaturanordnung (1) umfasst mindestens einen pneumatischen Stellantrieb (2) mit einer Steuereinheit. Das Armaturgehäuse (5) ist mit einem mindestens zweiteiligen, abnehmbaren Schutzmodul (9) versehen.

## Beschreibung

Die Erfindung betrifft eine sterile Prozessanlage, insbesondere in der Pharma-, Biotechnologie- und Lebensmittelindustrie, mit mindestens einer Armaturanordnung, wobei jede Armaturanordnung nicht lösbar in ein Rohrleitungssystem integriert ist, wobei jede Armaturanordnung mindestens eine Membran aufweist, die Räume voneinander dichtend trennt, wobei jede Membran zwischen einem Gehäuseunterteil und einer Haube eines Armaturgehäuses angeordnet ist, und jede Armaturanordnung mindestens einen Stellantrieb mit einer Steuereinheit umfasst,

Armaturanordnungen wie beispielsweise Membranventile sind essenzielle Komponenten in der industriellen Verfahrenstechnik und werden insbesondere für das Absperren und Dosieren verschiedener Fluide wie Gase, Dämpfe und Flüssigkeiten eingesetzt. Ihr besonderes Konstruktionsmerkmal ist die bewegliche Membran, die eine vollständige Trennung zwischen dem Produktraum und der Umgebung gewährleistet. Dadurch entfallen Wellendurchführungen und -abdichtungen, wodurch die Gefahr von Leckagen oder Verunreinigungen minimiert wird.

Die Einsatzgebiete von Membranventilen sind vielfältig. Einerseits schützen sie das Medium im Produktraum vor äußeren Einflüssen oder Kontaminationen - ein essenzieller Faktor in hochsensiblen Branchen wie der Pharmazie und Biotechnologie. Hier kommen sie beispielsweise bei der Herstellung und dem Transfer von Reinstmedien wie Water for Injection (WFl) oder Produkten wie Blutplasma und Impfstoffen zum Einsatz. Andererseits tragen sie dazu bei, die Umwelt vor potenziell gefährlichen Medien zu schützen, indem sie beispielsweise in Kernkraftwerken zur Steuerung von Kühlwasser oder in der chemischen Industrie zur Regulierung konzentrierter Säuren eingesetzt werden.

Insbesondere in pharmazeutischen Anlagen unterliegen Membranventile höchsten regulatorischen Anforderungen. Da biotechnologische Prozesse vor Kontaminationen durch Fremdorganismen geschützt werden müssen, werden die Anlagen regelmäßig mit gesättigtem Reinstdampf von mindestens 121 °C für 20 bis 30 Minuten sterilisiert. Das sogenannte Sterildesign stellt sicher, dass keine prozessfremden Organismen in die Anlage eindringen und den Produktionsprozess gefährden können. Zudem gelten strikte Vorgaben hinsichtlich der maximal zulässigen Partikelkonzentration und Oberflächenbeschaffenheit der eingesetzten Komponenten.

Ein besonderes Problem stellt der hohe Wärmeverlust ungeschützter Membranventile dar. Während Rohrleitungen meist isoliert werden, bleiben Ventile oft ungeschützt, wodurch wertvolle Energie verloren geht und die Temperaturstabilität beeinträchtigt wird. Dies kann den gesamten Prozess negativ beeinflussen und den Energieverbrauch erhöhen.

Ein weiteres Problem von heißen und ungeschützten Membranventilen ist der unzureichende Berührungsschutz, wodurch schlimme Verletzungen beim Bedienpersonal von sterilen Prozessanlagen hervorgerufen werden können.

Membranventile zeichnen sich durch ihre totraumarme Konstruktion aus. Sie sind so konzipiert, dass sie Ablagerungen von Medienresten verhindern und Kreuzkontaminationen minimieren. Ihr entleerungsoptimiertes Design ermöglicht eine rückstandsfreie Entfernung der geführten Medien, was besonders in sterilen Umgebungen von großer Bedeutung ist.

Ein weiteres zentrales Qualitätsmerkmal ist die Beweglichkeit der Membran, die senkrecht zur Einspannfläche einen Hub ausführen kann. Ihre Beständigkeit hängt maßgeblich vom verwendeten Werkstoff ab. In vielen Anwendungen haben sich Elastomere wie Ethylen-Propylen-Dien-Kautschuk (EPDM) bewährt, da sie eine hohe Elastizität und chemische Beständigkeit bieten. Zur Erhöhung der mechanischen Festigkeit können diese Membranen zusätzlich mit Gewebeeinlagen verstärkt werden.

Aufgrund der hohen Anforderungen an Dichtungsmaterialien und Oberflächen müssen die Membranen in regelmäßigen Abständen ausgetauscht werden. Die Standzeiten variieren je nach Medium und Prozessbedingungen zwischen drei und 36 Monaten. In großflächigen Produktionsanlagen mit hunderten Membranventilen erfordert dies effiziente Wartungskonzepte. Besonders in Reinräumen, die strengen Klassifizierungen unterliegen, müssen die eingesetzten Komponenten glatt, rissfrei, partikelarm und leicht zu reinigen sein. Des Weiteren sollten die meist in die Rohrleitung eingeschweißten Membranventile gut zugänglich sein für einen Membranwechsel.

Die Aufrechterhaltung der Reinheit erfordert außerdem regelmäßige und gründliche Reinigungsverfahren, bei denen spezielle, nicht partikelabgebende Reinigungsmittel und -geräte eingesetzt werden. Dies stellt sicher, dass keine Oberflächen beschädigt werden und die Sterilität dauerhaft gewährleistet bleibt.

Aufgabe der Erfindung ist es, eine sterile Prozessanlage mit mindestens einer Armaturanordnung bereitzustellen, deren Wärmeverluste im Vergleich zu bekannten Armaturanordnung reduziert werden können. Dabei sollte die Armaturanordnung eine hervorragende Zugänglichkeit zu den Membranen gewährleisten können und gleichzeitig einen ausreichenden Berührungsschutz umfassen.

Diese Aufgabe wird erfindungsgemäß durch ein Membranventil mit einer Membran gemäß den Merkmalen des Anspruchs 1 gelöst. Bevorzugte Varianten sind den Unteransprüchen, der Beschreibung und den Figuren zu entnehmen.

Gemäß der Erfindung ist das Armaturgehäuse mit einem mindestens zweiteiligen, abnehmbaren Schutzmodul versehen.

Sterile Prozessanlagen sind Anlagen, die zur Herstellung, Verarbeitung oder Lagerung von Produkten unter sterilen Bedingungen eingesetzt werden, insbesondere in der Pharma-, Biotechnologie- und Lebensmittelindustrie.

Sterile Prozessanlagen unterliegen in der Regel strengen hygienischen Anforderungen, um eine Kontamination des Produkts durch Mikroorganismen, Partikel oder andere unerwünschte Stoffe zu verhindern. Diese Anlagen sind so konzipiert, dass alle produktberührenden und prozesskritischen Komponenten eine hohe Reinigungs- und Sterilisierbarkeit aufweisen.

Eine sterile Prozessanlage umfasst eine Vielzahl von Komponenten, darunter Rohrleitungssysteme, Armaturen, Pumpen, Filtereinheiten und Steuerungselemente, die gemeinsam eine kontrollierte Umgebung für den Transport, die Dosierung und die Verarbeitung steriler Flüssigkeiten oder Gase gewährleisten.

Eine wesentliche Komponente der sterilen Prozessanlage ist die Armaturanordnung, die in Form eines Membranventils oder eines Blocks von mindestens zwei Membranventilen ausgeführt sein kann.

Eine Armaturanordnung hat die Aufgabe, den Durchfluss von Medien in einer sterilen Umgebung zu regulieren, indem sie diese absperrt, dosiert oder steuert.

Eine Membranventil-Blockausbildung besteht aus mehreren in einem gemeinsamen Blockgehäuse integrierten Membranventilen, die miteinander verbunden sind, um komplexe Schaltfunktionen in sterilen Prozessen zu ermöglichen. Die Blockausführung minimiert Toträume weiter und reduziert die Anzahl von Verbindungsstellen, was die Reinigung und Sterilisation der gesamten Anlage erleichtert.

Das Rohrleitungssystem einer sterilen Prozessanlage besteht aus Rohren, die dazu dienen, sterile Medien wie Flüssigkeiten, Gase oder Dämpfe zwischen verschiedenen Anlagenteilen zu transportieren. Diese Rohre bestehen in der Regel aus hochlegiertem Edelstahl, beispielsweise 1.4435 oder 1.4404, und haben hochglatt polierte Innenflächen mit einer Oberflächenrauigkeit von weniger als 0,8 µm Ra, um die Ablagerung von Partikeln und Mikroorganismen zu minimieren.

Die Rohre sind durch sterile Verbindungen wie Tri-Clamp-Verbindungen oder orbitale Schweißnähte miteinander verbunden, um eine durchgehende hygienische Oberfläche zu gewährleisten und Leckagen sowie Verunreinigungen zu verhindern.

Das Rohrleitungssystem ist so gestaltet, dass es sich leicht reinigen und sterilisieren lässt, insbesondere durch CIP- (Cleaning in Place) und SIP-(Sterilization in Place) Verfahren, bei denen die Leitungen und Komponenten mit Reinigungslösungen oder gesättigtem Dampf durchströmt werden, um jegliche Mikroorganismen abzutöten.

Ein zentrales Element der Armaturanordnung ist die Membran. Die Membran trennt zwei Räume in der Armatur voneinander und ermöglicht eine zuverlässige Abdichtung des Produktraums gegenüber der Umgebung. Sie besteht in der Regel aus elastomeren Werkstoffen wie Ethylen-Propylen-Dien-Kautschuk (EPDM), Fluorkautschuk (FKM) oder Polytetrafluorethylen (PTFE), die chemisch beständig und temperaturresistent sind. Die Membran ist flexibel und beweglich, sodass sie durch den pneumatischen bzw. durch einen elektrischen Stellantrieb geöffnet oder geschlossen werden kann. Ihre Funktion ist essenziell, um eine sterile Trennung der Medien zu gewährleisten und das Eindringen von Partikeln oder Mikroorganismen in das Produkt zu verhindern. Membranen müssen regelmäßig ausgetauscht werden, da sie durch chemische, thermische oder mechanische Belastungen einem natürlichen Verschleiß unterliegen. Die Wartungsfreundlichkeit der Armatur spielt daher eine entscheidende Rolle, um Stillstandszeiten der Anlage zu minimieren.

Das Gehäuseunterteil und die Haube bilden zusammen das Armaturgehäuse, das die Membran aufnimmt und die notwendige Stabilität sowie mechanische Führung für den Ventilmechanismus bereitstellt.

Das Gehäuseunterteil ist der untere Teil der Armatur, der mit dem Rohrleitungssystem verbunden ist, in der Regel durch eine Schweißverbindung, und den Produktraum umfasst. Es besteht in der Regel aus hochlegiertem Edelstahl mit elektropolierter Oberfläche, um eine optimale Reinigungsfähigkeit und Korrosionsbeständigkeit zu gewährleisten.

Die Haube der Armatur bildet den oberen Teil des Ventilgehäuses und dient als mechanische Aufnahme für den Stellantrieb inklusive Steuereinheit. Sie kann je nach Konstruktion mit zusätzlichen Elementen wie Wartungsöffnungen oder Schutzvorrichtungen ausgestattet sein, um den Zugang zur Membran zu erleichtern.

Der pneumatische Stellantrieb ist eine essenzielle Komponente der Armaturanordnung und ermöglicht die automatische Betätigung der Membran, indem er über Druckluft beaufschlagt wird. Der Stellantrieb besteht aus einer Druckluftkammer, einer Kolben- oder Membranmechanik und einer Verbindung zur Armatur, die die Bewegung der Membran überträgt.

Pneumatische Stellantriebe sind besonders in sterilen Prozessanlagen weit verbreitet, da sie eine präzise Steuerung und schnelle Reaktionszeiten ermöglichen. Sie können entweder einfachwirkend oder doppeltwirkend ausgeführt sein, wobei die einfachwirkende Variante durch Federkraft in die Ausgangsposition zurückgeführt wird, während die doppeltwirkende Variante für präzisere Steuerungsaufgaben eingesetzt wird.

Die Steuereinheit ist für die Überwachung und Regelung der Armatur verantwortlich. Sie empfängt Steuersignale von einer zentralen Prozesssteuerung oder einem Prozessleitsystem und steuert den pneumatischen Stellantrieb entsprechend an. Moderne Steuereinheiten sind mit Sensoren ausgestattet, die den aktuellen Ventilstatus überwachen und Rückmeldungen über die Position des Ventils geben können. Diese Rückmeldungen sind besonders wichtig, um sicherzustellen, dass die Sterilität im Prozess gewährleistet bleibt und das Ventil ordnungsgemäß schaltet.

Bei einer alternativen Variante der Erfindung kann der Stellantrieb auch elektrisch oder händisch ausgeführt sein.

Das Schutzmodul der vorliegenden Erfindung ist eine innovative Lösung zur Isolierung und zum Schutz der Armaturen in sterilen Prozessanlagen.

Das Schutzmodul besteht aus mindestens zwei Teilen und ist abnehmbar, sodass es eine einfache Wartung und Inspektion der Armatur ermöglicht.

Bei einer weiteren Ausführungsvariante ist das Schutzmodul zweiteilig ausgebildet und kann während der Wartung und/oder Inspektion der Armatur um die Armatur verbleiben. Bei dieser Variante der Erfindung ist der Bereich des Stellantriebs inklusive Befestigungselementen ausgespart.

Bei einer dritten Ausführungsvariante der Erfindung ist das Schutzmodul aus zwei Teilen ausgebildet und umgibt eine Armaturanordnung in Doppelblockausführung. Bei dieser Ausführungsvariante weist die Armaturanordnung zwei Membranen und zwei Stellantriebe auf, wobei beide Stellantriebe von dem Schutzgehäuse ausgespart sind, wodurch eine Demontage des Schutzmoduls während dem Membranwechsel nicht erforderlich ist.

Bei einer Ausführungsvariante der Erfindung für eine Armaturanordnung in der Ausführung eines Durchgangsmembranventils ist das Schutzmodul aus vier Teilen ausgebildet. Dabei werden zwei Teile des Schutzmoduls um das Gehäuseunterteil und die angeschweißten Rohren geklippt, während zwei weiteren Teile mithilfe einer formschlüssigen Verbindung durch die zwei geklippten Teile des Schutzmoduls geführt über die Befestigung des Stellantriebs geschoben werden. Bei dieser Ausführungsvariante können im Wartungsfall und/oder beim Membranwechsel die zwei weiteren Teile des Schutzmoduls aufgeschoben werden, so dass zerstörungsfrei und ohne Partikelfreisetzung gearbeitet und im Anschluss die zwei weiteren Teile des Schutzmoduls wieder über die Befestigung des Stellantriebs verschoben werden können. Bei dieser Ausführungsvariante ist das Schutzmodul vollständig zum thermischen Schutz um die Armaturanordnung vorgesehen und gewährleistet dennoch jederzeit vollständigen Zugang zur Wartung und Inspektion, ohne danach erneuert werden zu müssen.

Das Schutzmodul ist beispielsweise aus einem thermoplastischen Kunststoff gefertigt, das mittels additiver Fertigung verarbeitet bzw. hergestellt wird.

Ein thermoplastischer Kunststoff im Sinne der vorliegenden Erfindung ist ein polymeres Material, das sich bei Erhitzung reversibel verformen lässt und nach dem Abkühlen wieder in einen festen Zustand übergeht, ohne seine grundlegenden Materialeigenschaften zu verlieren. Thermoplastische Kunststoffe zeichnen sich durch ihre hohe Verarbeitungsflexibilität und Wiederverwendbarkeit aus, wodurch sie sich ideal für die additive Fertigung eignen. Im Kontext des Schutzmoduls für sterile Prozessanlagen sind thermoplastische Kunststoffe besonders vorteilhaft, da sie eine präzise Anpassung an die individuelle Armaturengeometrie ermöglichen, eine geringe Wärmeleitfähigkeit aufweisen und beständig gegenüber Reinigungs- und Desinfektionsmitteln sowie Temperaturen von mindestens 121°C für Dampfsterilisationsprozesse sind. Darüber hinaus können sie so modifiziert werden, dass sie mechanisch stabil, partikelarm und mit einer hygienischen, leicht zu reinigenden Oberfläche versehen sind, was sie für den Einsatz in sterilen Umgebungen nach GMP-Standards prädestiniert.

Das Schutzmodul ist beispielsweise aus einem Polyamid gefertigt und mittels additiver Fertigung hergestellt.

Polyamid (PA), insbesondere Polyamid 12 (PA12), ist ein hochleistungsfähiger thermoplastischer Kunststoff, der sich durch seine hervorragenden mechanischen Eigenschaften, chemische Beständigkeit und geringe Wasseraufnahme auszeichnet. Polyamide sind synthetische Polymere, die durch die Polymerisation von Lactamen oder Aminocarbonsäuren entstehen und durch Amidbindungen (-CO-NH-) in der Hauptkette gekennzeichnet sind. Polyamid 12 (PA12) ist eine spezielle Variante mit einer langen Kohlenstoffkette, die zu einer deutlich geringeren Wasseraufnahme führt als andere Polyamide, wodurch es seine mechanischen Eigenschaften auch in feuchter Umgebung weitgehend beibehält. Aufgrund seiner hohen Temperaturbeständigkeit, seiner exzellenten Dimensionsstabilität und seiner guten chemischen Beständigkeit gegenüber Ölen, Fetten, Alkoholen und schwachen Säuren eignet sich PA12 besonders für Anwendungen in sterilen Prozessanlagen.

Im Kontext des Schutzmoduls für die Armaturanordnung in einer sterilen Prozessanlage bietet PA12 mehrere entscheidende Vorteile. Es ist additiv fertigungstauglich, was eine hochpräzise Anpassung an komplexe Armaturengeometrien ermöglicht. Zudem weist es eine niedrige Wärmeleitfähigkeit auf, wodurch es sich für thermischen Schutz der sterilen Prozessanlage eignet. Die mechanische Festigkeit von PA12 sorgt für Langlebigkeit und Partikelfreiheit, was besonders in Reinräumen nach GMP-Standards von Bedeutung ist. Da Polyamid 12 eine glatte, rissfreie und gut reinigbare Oberfläche aufweist, kann es so verarbeitet werden, dass es einen Mittenrauwert (Ra) von weniger als 6,4 µm erreicht, wodurch Ablagerungen und Kreuzkontaminationen vermieden werden. Dank seiner hohen Temperaturbeständigkeit von über 121 °C ist PA12 zudem für Dampfsterilisationsprozesse (SIP - Sterilization in Place) geeignet, was es zu einem idealen Material für den Einsatz in der Pharma-, Biotechnologie- und Lebensmittelindustrie macht.

Additive Fertigung im Kontext von thermoplastischem Kunststoff bezeichnet ein schichtweises, materialaufbauendes Herstellungsverfahren, bei dem ein thermoplastisches Polymer durch schichtweise Ablagerung in eine dreidimensionale Form gebracht wird. Im Gegensatz zu subtraktiven Fertigungsmethoden wie Fräsen oder Bohren, bei denen Material entfernt wird, entsteht bei der additiven Fertigung das Bauteil direkt aus einem digitalen 3D-CAD-Modell, was eine hochpräzise, materialeffiziente und werkzeuglose Produktion ermöglicht.

Für die Herstellung des Schutzmoduls für eine Armaturanordnung in einer sterilen Prozessanlage ist die additive Fertigung besonders vorteilhaft, da sie eine individuelle Anpassung an die Geometrie der jeweiligen Armatur erlaubt und somit eine optimierte Passform mit minimalen Spaltmaßen gewährleistet. Durch den Einsatz von thermoplastischen Kunststoffen wie Polyamid 12 (PA12) oder anderen hochtemperaturbeständigen Polymeren lassen sich Bauteile mit geringer Wärmeleitfähigkeit, hoher mechanischer Stabilität und hervorragender chemischer Beständigkeit fertigen. Zudem ermöglicht die additive Fertigung eine geschlossene, hygienische Oberflächenstruktur, wodurch sich das Schutzmodul leicht reinigen lässt und für den Einsatz in GMP-konformen Reinräumen geeignet ist.

Beispielsweise ist das Schutzmodul durch die additive Fertigung mit zwei Komponenten ausgebildet, so dass das Schutzmodul eine harte Hülle und einen weichen Kern aufweist.

Bei einer Variante der Erfindung ist das Schutzmodul aus Polyamid additiv gebildet, wobei mittels gezielter Einstellung der Prozessparameter die Hülle des Schutzmoduls härter als der Kern des Schutzmoduls ausgebildet ist.

Bei einer Ausführungsvariante der Erfindung kann das Schutzmodul derart ausgeführt sein, dass die Oberfläche entweder innen oder außen oder sowohl innen als auch außen besonders hart ausgebildet ist, während das innere des Schutzmodul zwischen harten Außenschichten weich ausgeführt ist.

Da das Verfahren ohne spezielle Werkzeuge oder Formen auskommt, sind auch kleine Stückzahlen oder maßgeschneiderte Lösungen wirtschaftlich realisierbar. Zudem können durch die schichtweise Fertigung komplexe Geometrien, integrierte Schiebeklappen oder Aussparungen für Wartungszugänge direkt in die Struktur des Schutzmoduls integriert werden. Die additive Fertigung bietet damit eine flexible, ressourcenschonende und prozessoptimierte Lösung für die Herstellung hochfunktionaler Bauteile in sterilen Prozessanlagen der Pharma-, Biotechnologie- und Lebensmittelindustrie.

Diese Fertigungstechnologie erlaubt eine hochpräzise Anpassung an die Geometrie der jeweiligen Armatur und ermöglicht eine flexible Produktion auch für individuelle Sonderlösungen.

Auch bereits verbaute Armaturanordnungen, bei denen keine CAD-Daten der Bauteile vorliegen, können beispielsweise durch den Einsatz moderner 3D-Scan-Technologien hochpräzise digital erfasst werden. Dabei wird die exakte Geometrie der bestehenden Armaturen und des umgebenden Rohrleitungssystems dreidimensional vermessen und als digitale Modellbasis für die Entwicklung eines maßgeschneiderten Schutzmoduls genutzt.

Die additive Fertigung ermöglicht zum Beispiel anschließend die Herstellung eines mehrteiligen Schutzmoduls, das optimal an die spezifische Armaturengeometrie angepasst ist und durch eine formschlüssige oder kraftschlüssige Verbindung sicher befestigt werden kann.

Durch dieses Vorgehensweise lassen sich bestehende sterile Prozessanlagen und bereits installierte Armaturanordnungen effizient nachrüsten, ohne dass umfangreiche Umbauten oder Demontagen erforderlich sind. Dies erlaubt eine nachträgliche thermische Isolierung und einen verbesserten Berührungsschutz für Armaturen in Bestandsanlagen, wodurch sich Energieverluste reduzieren, Wartungsprozesse optimieren und die Sicherheitsstandards in Reinräumen weiter erhöhen lassen.

Im Falle eines unvorhergesehenen Defekts des Schutzmoduls kann dank der additiven Fertigung schnell und präzise ein Ersatzteil produziert werden, ohne dass eine vollständige Neuanfertigung des gesamten Moduls erforderlich ist. Durch die digitale Verfügbarkeit der 3D-Daten und die modulare, mehrteilige Konstruktion kann gezielt nur das beschädigte oder verschlissene Teil des Schutzmoduls nachproduziert und ausgetauscht werden.

Die Wärmeleitfähigkeit des thermoplastischen Kunststoffs des Schutzmoduls beträgt beispielsweise höchstens 0,4 W/(m·K), wodurch Wärmeverluste durch die Armaturanordnung und der sterilen Prozessanlage erheblich reduziert werden.

Bei einer weiteren Ausführungsvariante der Erfindung beträgt die Wärmeleitfähigkeit des thermoplastischen Kunststoffs des Schutzmoduls weniger 0,3 W/(m·K), vorzugsweise weniger als 0,2 W/(m·K), insbesondere weniger als 0,15 W/(m·K).

Zudem ist das Schutzmodul aus dem speziell ausgewählten thermoplastischen Kunststoff beispielsweise mechanisch stabil und gibt keine Partikel an die Umgebung ab, was es für den Einsatz in Reinräumen prädestiniert.

Beispielsweise ist das Schutzmodul mechanisch stabil ausgebildet und weist eine Härte nach Shore A von mehr als 98 nach ASTM D785 auf.

Bei einer Ausführungsvariante der Erfindung gewährleistet das Schutzmodul als mindestens zweiteiliges Gebilde mit einer formschlüssigen Verbindung, insbesondere einem Clip-System, eine zuverlässige und werkzeuglose Befestigung an der Armaturanordnung in der sterilen Prozessanlage.

Die formschlüssige Verbindung basiert beispielsweise auf mechanisch ineinandergreifenden Strukturen, die ein selbsthaltendes System bilden, sodass das Schutzmodul sicher an der Armatur fixiert bleibt, ohne dass zusätzliche Befestigungselemente wie Schrauben oder Klemmvorrichtungen erforderlich sind. Ein Clip-System, beispielsweise bestehend aus einem Fügeelement und einem Aufnahmeelement, bietet den Vorteil, dass es eine schnelle und einfache Montage sowie Demontage ermöglicht, was insbesondere für regelmäßige Wartungsarbeiten oder den Membranwechsel von Vorteil ist. Gleichzeitig bleibt die mechanische Stabilität des Schutzmoduls erhalten, sodass es keine Partikel an die Umgebung abgibt und sich für den Einsatz in GMP-konformen Reinräumen eignet. Durch die hohe Passgenauigkeit des Clip-Systems wird zudem sichergestellt, dass das Schutzmodul spaltarm an der Armatur anliegt, um thermische Isolierungseigenschaften zu optimieren und das Risiko von Kreuzkontaminationen zu minimieren.

Bei einer weiteren Ausführungsvariante der Erfindung ermöglicht das Schutzmodul als mindestens zweiteiliges Gebilde mit einer kraftschlüssigen Verbindung eine sichere und dauerhafte Befestigung an der Armaturanordnung durch die Erzeugung von Haltekräften zwischen den Modulteilen, die durch Reibung oder Verspannung wirken.

Eine kraftschlüssige Verbindung kann beispielsweise durch eine Klemmvorrichtung, einen Federmechanismus oder ein Spannsystem realisiert werden, wodurch das Schutzmodul fest an der Armatur fixiert wird, ohne dass eine zusätzliche formschlüssige Verzahnung erforderlich ist. Der Vorteil einer kraftschlüssigen Verbindung liegt in der gleichmäßigen Druckverteilung, die das Schutzmodul fest an der Armatur hält und ein ungewolltes Lösen verhindert.

Beispielsweise können die mehrteiligen Gebilde des Schutzmoduls auch mittels Schrauben zueinander positioniert und fixiert werden.

Diese Verbindungsmethode ist beispielsweise besonders für Anwendungen geeignet, bei denen eine stabile und erschütterungsresistente Fixierung erforderlich ist, beispielsweise in Anlagen mit hohen mechanischen Belastungen oder Temperaturwechseln. Gleichzeitig ermöglicht die einfache Demontierbarkeit eine schnelle Wartung der darunterliegenden Armatur, ohne dass das gesamte Schutzmodul ausgetauscht oder beschädigt wird.

Eine Ausführungsvariante der Erfindung, bei der das Schutzmodul als mindestens dreiteiliges Gebilde mit teilweise gleitbar ausgebildeten Teilen, beispielsweise aus ausladenden Rundungen und geklemmten ausladenden Rändern, ausgeführt ist, stellt eine besonders flexible und anpassungsfähige Konstruktion dar, die speziell für Armaturen mit komplexer Geometrie oder für beengte Einbausituationen konzipiert ist.

Die gleitbare Ausbildung einzelner Modulteile ermöglicht beispielsweise eine bewegliche Anpassung an die Form der Armatur, sodass sich das Schutzmodul leicht anbringen und wieder entfernen lässt, ohne dass es vollständig zerlegt werden muss. Dies ist insbesondere für enge oder verwinkelte Installationen von Vorteil, bei denen starre Schutzmodule nicht praktikabel wären.

Die gleitbaren Teile des Schutzmoduls können sich zum Beispiel ineinander verschieben oder überlappen, wodurch eine optimale thermische Isolierung gewährleistet wird und gleichzeitig eine spannungsfreie Anpassung an unterschiedliche Armaturendimensionen erfolgt. Diese Bauweise bietet zudem den Vorteil, dass Wartungsöffnungen oder Schiebeklappen direkt in das Schutzmodul integriert werden können, sodass beispielsweise ein Membranwechsel oder der Zugriff auf Verbindungselemente erfolgen kann, ohne das Schutzmodul demontieren zu müssen. Durch die modulare Gleitkonstruktion bleibt die mechanische Stabilität des Schutzmoduls erhalten, während gleichzeitig eine hohe Funktionalität und Benutzerfreundlichkeit sichergestellt werden.

Die Konstruktion des Schutzmoduls erlaubt verschiedene Befestigungsmethoden, darunter formschlüssige und kraftschlüssige Verbindungen. Die formschlüssige Verbindung erfolgt beispielsweise durch ein Clip-System, bei dem die Teile des Moduls ineinandergreifen. Die kraftschlüssige Verbindung kann durch Klemmmechanismen oder Spannvorrichtungen realisiert werden. In einer alternativen Ausführungsform besteht das Schutzmodul aus mindestens drei Teilen, wobei einzelne Elemente gleitbar zueinander angeordnet sind, um eine flexible Anpassung an unterschiedliche Ventilgrößen und -formen zu ermöglichen.

Das Schutzmodul weist außerdem spezielle Eigenschaften auf, die es für den Einsatz in sterilen Umgebungen optimieren. Es ist für Temperaturen von mindestens 121 °C ausgelegt, sodass es den Bedingungen einer Dampfsterilisation standhält.

Darüber hinaus ist das Schutzmodul beispielsweise beständig gegenüber Reinigungs- und Desinfektionsmitteln und besitzt zusätzlich eine Antihafteigenschaft, um Ablagerungen und Kreuzkontaminationen zu vermeiden.

Beispielsweise ist das Schutzmodul individuell an die jeweilige Armaturgeometrie angepasst und bietet eine optimierte Passform.

Ein weiteres zentrales Merkmal ist die exakte Passform mit minimalen Spaltmaßen zwischen dem Schutzmodul und dem Armaturgehäuse, die weniger als 0,9 mm, vorzugsweise weniger als 0,5 mm und insbesondere weniger als 0,3 mm betragen. Dies verhindert das Eindringen von Partikeln und unterstützt eine effektive thermische Isolierung.

Das Schutzmodul der Armaturanordnung ist so konzipiert, dass es die heiße Oberfläche der Armaturanordnung auf ein sicheres Maß reduziert und damit den notwendigen Schutz vor thermischen Gefährdungen gewährleistet. Dabei erfüllt das Schutzmodul die Anforderungen der DIN EN ISO 13732-1, welche die Beurteilung von Oberflächentemperaturen in Bezug auf den Hautkontakt regelt. Durch die gezielte Reduzierung der Oberflächentemperatur unter die in der Norm definierten Verbrennungsschwellen wird sichergestellt, dass die Armaturanordnung die geltenden Sicherheitsanforderungen erfüllt. Hierbei werden insbesondere die Materialeigenschaften, die Wärmeträgheit sowie die zulässigen Kontaktdauern gemäß der normativen Vorgaben berücksichtigt, um eine Gefährdung durch heiße Medien und Oberflächen auszuschließen.

Bei einer weiteren Ausführungsvariante der Erfindung weist das Schutzmodul ein thermochromes Material auf, welches sich temperaturabhängig verfärben kann. Dadurch ist für das Bedienpersonal von sterilen Prozessanlagen direkt ersichtlich, inwieweit bei einer Berührung des Schutzmoduls eine Gefahr von heißen Oberflächen ausgeht.

Beispielsweise kann das thermochrome Material beim additiven Fertigungsprozess des Schutzmoduls mit eingearbeitet werden.

Bei einer weiteren Variante der Erfindung kann das Schutzmodul mit einem thermochromen Material beschichtet werden.

Die Oberfläche des Schutzmoduls ist beispielsweise glatt und weist einen Mittenrauwert (Ra) von weniger als 6,3 µm auf, wodurch sie leicht zu reinigen ist und höchste Hygieneanforderungen erfüllt.

Beispielsweise beträgt der Mittenrauwert (Ra) des Schutzmoduls weniger als 5,0 µm, vorzugsweise weniger als 3,2 µm, insbesondere weniger als 1,6 µm.

Das Schutzmodul weist beispielsweise mindestens eine Aussparung für das Rohrleitungssystem auf, wodurch eine präzise und passgenaue Integration, auch mittels angeformter Übergängen, in die sterile Prozessanlage gewährleistet wird.

Diese Aussparung ist bei einer Ausführungsvariante so gestaltet, dass sie sich eng um die angeschweißten Rohrleitungen schmiegt, wodurch ein homogener Übergang zwischen der Armatur und dem Schutzmodul entsteht. Dies ermöglicht nicht nur eine optimale thermische Isolierung, indem Wärmeverluste auf ein Minimum reduziert werden, sondern trägt auch dazu bei, dass sich keine Schmutz- oder Reinigungsmittelreste in ungewollten Zwischenräumen ablagern können.

Zum Beispiel werden durch die gezielte Anpassung der Aussparungen an die jeweiligen Rohrdurchmesser optimale Spaltmaße erzielt, sodass der Abstand zwischen Schutzmodul und Rohrleitung systematisch auf weniger als 0,9 mm, vorzugsweise weniger als 0,5 mm und insbesondere weniger als 0,3 mm reduziert wird. Dies verhindert das Eindringen von Verunreinigungen, erleichtert die Reinigung und trägt zur Einhaltung strenger hygienischer Anforderungen in GMP-konformen Reinräumen bei.

Bei einer weiteren Ausführungsvariante ist auch ein Clipsystem zum Einhaken der Rohrleitungsisolierung an das Schutzmodul vorgesehen, wodurch Spalte im Übergang vermieden werden können.

Gemäß der Erfindung umfasst das Verfahren zur Herstellung eines Schutzmoduls für eine Armaturanordnung in einer sterilen Prozessanlage mehrere präzise aufeinander abgestimmte Schritte, die eine maßgeschneiderte Fertigung, optimale Passform und maximale Funktionalität des Schutzmoduls sicherstellen. Zunächst erfolgt die Erfassung der spezifischen Armaturgeometrie, um eine exakte digitale Grundlage für die spätere Konstruktion zu erhalten. Da in vielen bestehenden Anlagen keine CAD-Daten der verbauten Armaturen verfügbar sind, kommt hier ein hochpräzises 3D-Scanning-Verfahren zum Einsatz. Mithilfe von optischen oder Laserscannern wird die gesamte Geometrie der Armatur inklusive der Anschlüsse, der Membranventile und der Rohrleitungsintegration erfasst. Dieses Verfahren ermöglicht eine millimetergenaue Digitalisierung, sodass selbst komplexe Formen und enge Einbauverhältnisse exakt abgebildet werden. Alternativ können, falls vorhanden, bestehende CAD-Daten direkt in den Konstruktionsprozess übernommen und weiterbearbeitet werden. Auf Basis der erfassten Geometriedaten wird anschließend ein passgenaues Schutzmodul entworfen und mithilfe eines additiven Fertigungsverfahrens hergestellt. Diese Fertigungsmethode erlaubt eine individuelle und flexible Produktion und ermöglicht die direkte Umsetzung der digitalen 3D-Daten in ein physisches Bauteil. Dadurch können komplexe Strukturen realisiert werden, die mit konventionellen Fertigungsmethoden nur schwer oder gar nicht herstellbar wären. Die schichtweise Aufbauweise sorgt zudem für eine hohe Präzision, insbesondere an kritischen Bereichen wie den Kontaktflächen des Schutzmoduls zu Rohrleitungen und zur Armaturanordnung. Für die Herstellung des Schutzmoduls wird ein temperaturbeständiges Kunststoffmaterial mit niedriger Wärmeleitfähigkeit verwendet, das die Anforderungen an eine effektive thermische Isolierung und mechanische Stabilität erfüllt. Hierfür eignen sich insbesondere hochleistungsfähige Thermoplaste wie Polyamid 12 (PA12) oder hochtemperaturfeste Kunststoffe mit modifizierten Isoliereigenschaften. Diese Materialien gewährleisten eine lange Lebensdauer, chemische Beständigkeit gegenüber Reinigungs- und Desinfektionsmitteln und eine mechanische Stabilität, sodass das Schutzmodul den hohen Anforderungen in einer sterilen Prozessumgebung standhält. Die niedrige Wärmeleitfähigkeit des gewählten Materials trägt dazu bei, dass Wärmeverluste minimiert und die Temperaturverhältnisse in der Armatur stabil gehalten werden. Ein wesentliches Merkmal des Schutzmoduls ist die Integration von formschlüssigen Verbindungselementen, die eine werkzeuglose Montage ermöglichen. Die formschlüssige Verbindung kann in Form eines Clip-Systems, eines Rastmechanismus oder einer passgenauen Verzahnung realisiert werden, wodurch das Schutzmodul ohne zusätzliche Befestigungselemente sicher an der Armatur gehalten wird. Diese Bauweise erleichtert die Installation und sorgt dafür, dass das Schutzmodul auch bei Temperaturschwankungen oder mechanischen Belastungen stabil bleibt. Gleichzeitig lässt sich das Modul bei Bedarf schnell entfernen und wieder montieren, was die Wartungsfreundlichkeit erheblich verbessert. Ein weiterer essenzieller Bestandteil des Verfahrens ist die Ausbildung von Aussparungen oder Schiebeklappen, die eine Wartung der Armaturanordnung ohne Demontage des Schutzmoduls ermöglichen. Diese funktionalen Öffnungen sind so konzipiert, dass sie den Zugriff auf Verbindungselemente oder Membranwechsel erlauben, ohne dass das gesamte Modul entfernt werden muss. Dadurch lassen sich Wartungszeiten erheblich reduzieren, was insbesondere in Anlagen mit kurzen Stillstandszeiten und hohen Hygieneanforderungen von Vorteil ist. Die Aussparungen sind zudem so ausgelegt, dass sie sich eng an die Rohrleitungen und Armaturengeometrie anschmiegen, wodurch die Spaltmaße minimal gehalten werden und eine hygienische, leicht zu reinigende Oberfläche entsteht.

Durch die Kombination dieser innovativen Fertigungsmethoden und materialtechnischen Eigenschaften entsteht ein hochfunktionales Schutzmodul, das eine optimale thermische Isolierung, mechanische Stabilität und Wartungsfreundlichkeit bietet. Zudem bietet das Schutzmodul einen hervorragenden Berührungsschutz, so dass das Bedienpersonal der Prozessanlage sich an heißen Armaturen nicht verletzen können. Das Verfahren gewährleistet eine maßgeschneiderte Produktion für neue sowie bestehende Anlagen, wodurch sowohl Neuentwicklungen als auch Nachrüstungen effizient umgesetzt werden können.

Erfindungsgemäß wird ein Schutzmodul zur thermischen Isolierung und zum Berührungsschutz von Armaturanordnungen in sterilen Prozessanlagen, insbesondere in der Pharma-, Biotechnologie- und Lebensmittelindustrie, verwendet.

Weitere Merkmale und Vorteile der Erfindung ergeben sich aus der Beschreibung von Ausführungsbeispielen anhand von Zeichnungen und aus den Zeichnungen selbst.

Dabei zeigt:
Fig. 1 eine Schnittdarstellung einer Armaturanordnung mit Schutzmodul,
Fig. 2 eine Explosionsdarstellung einer Armaturanordnung mit Schutzmodul,
Fig. 3 eine Explosionsdarstellung einer Armaturanordnung mit Schutzmodul integriert im Rohrleitungssystem,
Fig. 4 eine weitere Schnittdarstellung einer Armaturanordnung in Blockausführung mit Schutzmodul,
Fig. 5 eine Explosionsdarstellung einer Armaturanordnung in Blockausführung mit Schutzmodul,
Fig. 6 eine Explosionsdarstellung einer Armaturanordnung in Blockausführung mit Schutzmodul integriert im Rohrleitungssystem.

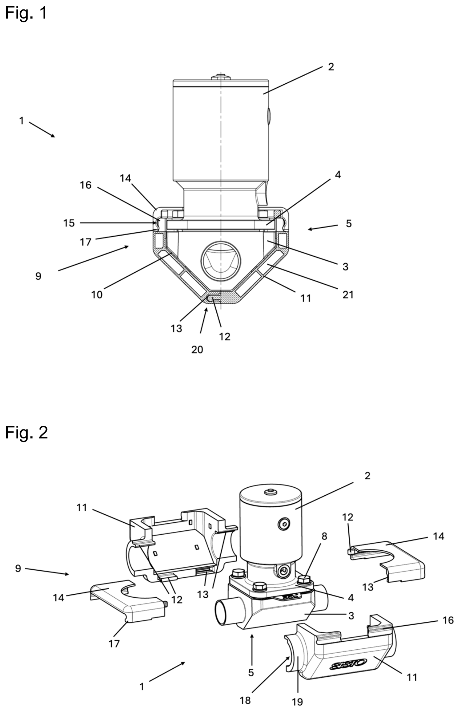

Die Fig. 1 bis 3 zeigen eine Armaturanordnung 1 in der Ausführung als Durchgangsmembranventil mit einem Stellantrieb 2, der in der dargestellten Ausführungsvariante pneumatisch ausgebildet ist.

Das Gehäuseunterteil 3 und die Haube 4 bilden zusammen das Armaturgehäuse 5, das die Membran 6 aufnimmt. Das Gehäuseunterteil 3 ist mit dem Rohrleitungssystem 7 in der dargestellten Ausführung durch eine Schweißverbindung verbunden. Die Haube 4 der Armaturanordnung 1 bildet den oberen Teil des Armaturgehäuse 5 und dient als mechanische Aufnahme für den Stellantrieb 2.

Die Membran 6 trennt zwei Räume in der Armaturanordnung 1 voneinander und besteht aus Ethylen-Propylen-Dien-Kautschuk (EPDM). Die Membran 6 ist mithilfe von Befestigungsmittel 8 zwischen der Haube 4 und dem Gehäuseunterteil 3 fixiert und eingespannt.

Das Armaturgehäuse 5 ist in der dargestellten Ausführungsvariante mit einem vierteiligen, abnehmbaren Schutzmodul 9 versehen, welches additiv aus einem Polyamid 12 hergestellt ist. Die Wärmeleitfähigkeit des thermoplastischen Kunststoff des Schutzmoduls 9 beträgt 0,4 W/(m·K), die Oberfläche des Schutzmoduls 9 ist äußerst glatt ausgebildet und weist einen Mittenrauwert (Ra) von 6,3 µm auf. Das Schutzmodul 9 ist beständig gegenüber Reinigungs- und Desinfektionsmitteln sowie Temperaturen von mindestens 121 °C.

Ein Spalt 10 zwischen dem Armaturgehäuse 5 und dem Schutzmodul 9 beträgt 0,3 mm.

Zwei Teile 11 des Schutzmoduls 9 sind um das Gehäuseunterteil 3 und das angeschweißte Rohrleitungssystem 7 mithilfe der formschlüssigen Verbindung 20 in der Ausführung mittels der Fügeelemente 12 und Aufnahmeelemente 13 geklippt, während zwei weitere Teile 14 mithilfe einer formschlüssigen Verbindung 15 durch die zwei geklippten Teile 11 des Schutzmoduls 9 geführt über die Befestigungsmittel 8 des Stellantriebs 2 geschoben werden. Bei der formschlüssigen Verbindung 15 wird an beiden Außenseiten des Schutzmoduls 9 der ausladende Rand 17 des weiteren Teils 14 unter die ausladende Rundung 16 des Teils 11 geklemmt.

Bei der gezeigten Ausführungsvariante können im Wartungsfall und/oder beim Membranwechsel die zwei weiteren Teile 14 des Schutzmoduls 9 aufgeschoben werden, so dass zerstörungsfrei und ohne Partikelfreisetzung gearbeitet werden und im Anschluss die zwei weiteren Teile 14 des Schutzmoduls 9 wieder über die Befestigungsmittel 8 des Stellantriebs 2 verschoben werden können.

Die zwei Teile 11 des Schutzmoduls 9 weisen jeweils zwei Aussparungen 18 für das Rohrleitungssystem 7 und angeformte Übergänge 19 in Form von Halbschalen auf.

Das Schutzmodul 9 weist mehrere Hohlräume 21 mit eingeschlossener Luft zur Steigerung der Isoliereigenschaften des Schutzmoduls 9 auf.

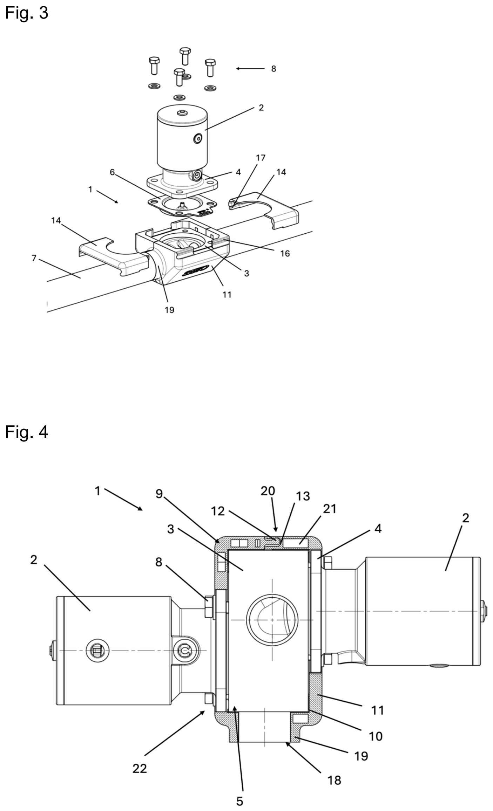

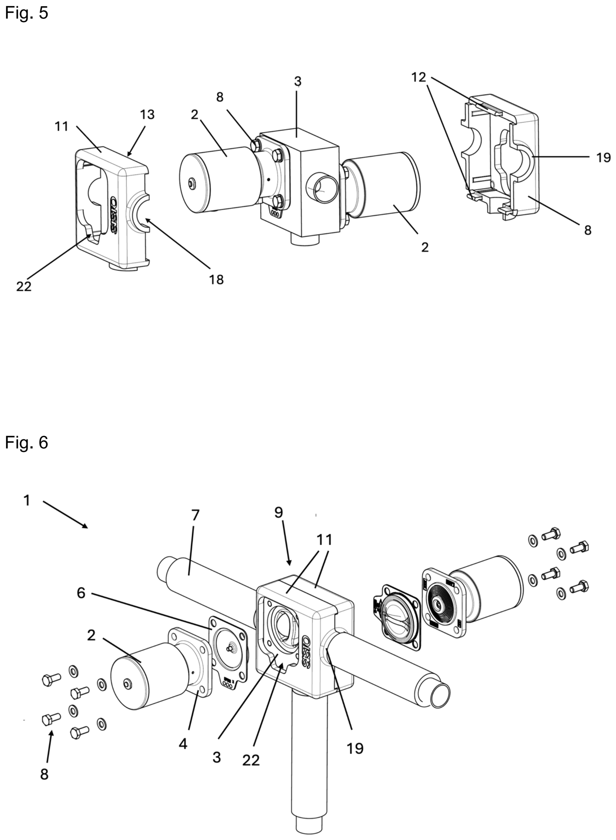

Die Figuren 4 bis 6 zeigen eine Armaturanordnung 1, bei der das Gehäuseunterteil 3 als Mehrsitzventilblock ausgeführt ist, für zwei Membrane 6 und zwei Stellantriebe 2. Dabei entsprechen viele Merkmale der Beschreibung der Figuren 1 bis 3, so dass im Folgenden nur Unterschiede der Ausführungsform hervorgehoben werden.

Das Armaturgehäuse 5 ist in der Ausführungsvariante der Figuren 4 bis 6 mit einem zweiteiligen, abnehmbaren Schutzmodul 9 versehen. Die zwei Teile 11 bilden das Schutzmodul 9 und weisen jeweils drei Aussparungen 18, die exakt auf das Rohrleitungssystem 7 abgestimmt sind. Diese Aussparungen 18 sind mit angeformten Übergängen 19 in Form von Halbschalen versehen, wodurch eine passgenaue Einbettung der Rohrleitungen ermöglicht wird.

Zusätzlich weisen die zwei Teile 11 des Schutzmoduls 9 jeweils eine Aussparung 22 auf, die einen Zugriff auf die Befestigungsmittel 8 und einen Membranwechsel ohne Demontage das Schutzmoduls 9 ermöglichen. Dadurch kann das Schutzmodul auch nachträglich an bereits installierte Armaturanordnungen 1 angebracht werden.

## Patentansprüche

1. Sterile Prozessanlage, insbesondere in der Pharma-, Biotechnologie- und Lebensmittelindustrie, mit mindestens einer Armaturanordnung (1), wobei jede Armaturanordnung (1) nicht lösbar in ein Rohrleitungssystem (8) integriert ist, wobei jede Armaturanordnung (1) mindestens eine Membran (6) aufweist, die Räume voneinander dichtend trennt, wobei jede Membran (6) zwischen einem Gehäuseunterteil (3) und einer Haube (4) eines Armaturgehäuses (5) angeordnet ist, und jede Armaturanordnung (1) mindestens einen Stellantrieb (2) mit einer Steuereinheit umfasst, **dadurch gekennzeichnet,**
**dass** das Armaturgehäuse (5) mit einem mindestens zweiteiligen, abnehmbaren Schutzmodul (9) versehen ist.

2. Prozessanlage nach Anspruch 1, **dadurch gekennzeichnet, dass** das Schutzmodul (9) aus einem thermoplastischen Kunststoff mittels additiver Fertigung hergestellt ist.

3. Prozessanlage nach Anspruch 1 oder 2, **dadurch gekennzeichnet, dass** das Schutzmodul (9) eine Wärmeleitfähigkeit von höchstens 0,4 W/(m · K) aufweist.

4. Prozessanlage nach einem der Ansprüche 1 bis 3, **dadurch gekennzeichnet, dass** das Schutzmodul (9) als mindestens zweiteiliges Gebilde ausgeführt ist, das durch mindestens eine formschlüssige Verbindung (15, 20) zusammengehalten wird.

5. Prozessanlage nach einem der Ansprüche 1 bis 3, **dadurch gekennzeichnet, dass** das Schutzmodul (9) als mindestens zweiteiliges Gebilde ausgeführt ist, das durch eine kraftschlüssige Verbindung zusammengehalten wird.

6. Prozessanlage nach einem der Ansprüche 1 bis 3, **dadurch gekennzeichnet, dass** das Schutzmodul (9) als mindestens dreiteiliges Gebilde ausgeführt ist, wobei die Teile (11, 14) des Gebildes teilweise aneinander gleitbar ausgebildet sind.

7. Prozessanlage nach einem der Ansprüche 1 bis 6, **dadurch gekennzeichnet, dass** das Schutzmodul (9) eine Härte nach Shore A von mehr als 98 aufweist und keine Partikel an die Umgebung abgibt.

8. Prozessanlage nach einem der Ansprüche 1 bis 7, **dadurch gekennzeichnet, dass** das Schutzmodul (9) Aussparungen (22) und/oder Schiebeklappen aufweist, die einen Zugriff auf Befestigungsmittel (8) und einen Membranwechsel ohne Demontage das Schutzmoduls (9) ermöglichen.

9. Prozessanlage nach einem der Ansprüche 1 bis 8, **dadurch gekennzeichnet, dass** das Schutzmodul (9) eine Materialbeständigkeit gegenüber Reinigungs- und Desinfektionsmitteln aufweist.

10. Prozessanlage nach einem der Ansprüche 1 bis 9, **dadurch gekennzeichnet, dass** das Schutzmodul (9) für Temperaturen von mindestens 121 °C ausgelegt ist, um eine Dampfsterilisation zu ermöglichen.

11. Prozessanlage nach einem der Ansprüche 1 bis 10, **dadurch gekennzeichnet, dass** das Schutzmodul (9) individuell an die jeweilige Armaturgeometrie angepasst ist und eine optimierte Passform bietet, wobei ein Spalt (10) zwischen dem Armaturgehäuse (5) und dem Schutzmodul (9) weniger als 0,9 mm, vorzugsweise weniger als 0,5 mm und insbesondere weniger als 0,3 mm beträgt.

12. Prozessanlage nach einem der Ansprüche 1 bis 11, **dadurch gekennzeichnet, dass** das Schutzmodul (9) mit einer Antihafteigenschaft versehen ist, um Ablagerungen und Kreuzkontaminationen zu vermeiden.

13. Prozessanlage nach einem der Ansprüche 1 bis 12, **dadurch gekennzeichnet, dass** der Mittenrauwert (Ra) des Schutzmoduls (9) weniger als 6,3 µm, vorzugsweise weniger als 3,2 µm, insbesondere weniger als 1,6 µm beträgt.

14. Prozessanlage nach einem der Ansprüche 1 bis 13, **dadurch gekennzeichnet, dass** das Schutzmodul (9) mindestens eine Aussparung (18) für das Rohrleitungssystem (7) aufweist.

15. Prozessanlage nach einem der Ansprüche 1 bis 14, **dadurch gekennzeichnet, dass** das Schutzmodul (9) ein thermochromes Material umfasst.

16. Prozessanlage nach einem der Ansprüche 1 bis 15, **dadurch gekennzeichnet, dass** das Schutzmodul (9) eine harte Hülle und einen im Vergleich zur Hülle weicheren Kern aufweist.

17. Verfahren zur Herstellung eines Schutzmoduls (9) für eine Armaturanordnung (1) in einer sterilen Prozessanlage nach einem der vorhergehenden Ansprüche, umfassend die Schritte:
• Erfassung einer spezifischen Armaturgeometrie durch 3D-Scanning oder CAD-Daten,
• Herstellung eines passgenauen Schutzmoduls (9) durch ein additives Fertigungsverfahren,
• Verwendung eines temperaturbeständigen Kunststoffmaterials mit niedriger Wärmeleitfähigkeit,
• Ausbildung von Aussparungen und/oder Schiebeklappen zur Wartung der Armaturanordnung (1) ohne Demontage des Schutzmoduls (9).

18. Verwendung eines Schutzmoduls (9) nach einem der Ansprüche 1 bis 16 zur thermischen Isolierung und zum Berührungsschutz von Armaturanordnungen (1) in sterilen Prozessanlagen, insbesondere in der Pharma-, Biotechnologie- und Lebensmittelindustrie.
